# FASCICULE DE BREVET EUROPEEN

(11) **EP 3 736 638 B1**
(45) Date de publication et mention de la délivrance du brevet: **01.12.2021**
(21) Numéro de dépôt: 19173113.2
(22) Date de dépôt: 07.05.2019
(51) Int. Cl.: G04B 17/06, C22C 27/02, B32B 15/01, C22C 19/03, C22C 5/02, C22C 5/06, C22C 9/00, C22F 1/00, C22F 1/18

(54) **PROCEDE DE FABRICATION D'UN RESSORT SPIRAL POUR MOUVEMENT D'HORLOGERIE**
HERSTELLUNGSVERFAHREN EINER SPIRALFEDER FÜR UHRWERK
METHOD FOR MANUFACTURING A HAIRSPRING FOR CLOCK MOVEMENT

(43) Date de publication de la demande: 11.11.2020
(73) Titulaire: Nivarox-FAR S.A., 2400 Le Locle (CH)
(72) Inventeur: Charbon, Christian, 2054 Chézard-St-Martin (CH)
(74) Mandataire: ICB SA

(56) Documents cités:
- EP-A1- 0 886 195
- WO-A2-2015/189278

## Description

### Domaine de l'invention

L'invention concerne un procédé de fabrication d'un ressort spiral destiné à équiper un balancier d'un mouvement d'horlogerie.

### Arrière-plan de l'invention

La fabrication de ressorts spiraux pour l'horlogerie doit faire face à des contraintes souvent à première vue incompatibles :
- nécessité d'obtention d'une limite élastique élevée,
- facilité d'élaboration, notamment de tréfilage et de laminage,
- excellente tenue en fatigue,
- stabilité des performances dans le temps,
- faibles sections.

La réalisation de ressorts spiraux est en outre centrée sur le souci de la compensation thermique, de façon à garantir des performances chronométriques régulières. Il faut pour cela obtenir un coefficient thermoélastique proche de zéro. On recherche également à réaliser des ressorts spiraux présentant une sensibilité aux champs magnétiques limitée.

Des spiraux ont été développés à partir d'alliages de niobium et de zirconium. Toutefois, ces alliages posent des problèmes de collement et de grippage dans les filières d'étirage ou de tréfilage (diamant ou métal dur) et contre les rouleaux de laminage (métal dur ou acier), ce qui les rend quasiment impossibles à transformer en fils fins par les procédés standards utilisés par exemple pour l'acier.

Le document EP0886195 divulgue un spiral dont l'ébauche de partance est réalisée dans un alliage en Nb-Zr, dopé avec un métal ductile, pour rendre toute l'ébauche plus ductile. Ce document couvre le préambule de la revendication indépendante 1 annexée.

### Résumé de l'invention

Un objet de la présente invention est de proposer un procédé de fabrication d'un ressort spiral destiné à équiper un balancier d'un mouvement d'horlogerie permettant de faciliter les déformations, et plus particulièrement d'obtenir un laminage aisé.

A cet effet, l'invention concerne un procédé de fabrication d'un ressort spiral destiné à équiper un balancier d'un mouvement d'horlogerie qui comprend :
- une étape d'élaboration d'une ébauche dans un alliage de niobium et de zirconium constitué de :
- niobium : balance à 100% en poids,
- zirconium: entre 10 et 30% en poids,
- impuretés avec un pourcentage total compris entre 0 et 0.5% en poids.
- une étape de recuit et refroidissement de ladite ébauche suivie d'une étape de déformation de l'ébauche recuite pour former un fil, les étapes de recuit et de déformation pouvant être répétées plusieurs fois,
- une étape d'estrapadage pour former le ressort-spiral,
- une étape finale de traitement thermique.

Selon l'invention, le procédé comprend avant l'étape de déformation et après l'étape de recuit et refroidissement, une étape de dépôt, sur l'ébauche, d'une couche d'un matériau ductile choisi parmi le groupe comprenant le cuivre, le nickel, le cupro-nickel, le cupro-manganèse, l'or, l'argent, le nickel-phosphore Ni-P et le nickel-bore Ni-B, pour faciliter la mise en forme sous forme de fil. L'épaisseur de la couche de matériau ductile déposée est choisie de sorte que le rapport surface de matériau ductile/surface de l'alliage NbZr pour une section de fil donnée est inférieur à 1, de préférence inférieur à 0.5, et plus préférentiellement compris entre 0.01 et 0.4. Seul un rapport surface de matériau ductile/surface de l'alliage NbZr choisi dans ces gammes permet de pouvoir laminer aisément le composite matériau ductile/NbZr. L'épaisseur de matériau ductile est optimisée pour que la pointe, créée par limage ou par étirage à chaud, nécessaire à l'introduction du fil dans la filière lors de l'étirage ou du tréfilage soit recouverte du matériau ductile. La couche doit être fine. En effet, une couche épaisse donne lieu à des problèmes de bourrage dans la filière. En outre, il a été observé avec une couche épaisse de matériau ductile que la forme de l'âme du fil est difficile à contrôler, avec une forme qui s'éloigne du cercle.

### Description de l'invention

L'invention concerne un procédé de fabrication d'un ressort spiral destiné à équiper un balancier d'un mouvement d'horlogerie et réalisé dans un alliage comportant du niobium et du zirconium.

Le procédé comprend les étapes suivantes :
- une étape d'élaboration d'une ébauche dans un alliage de niobium et de zirconium constitué de :
   - niobium : balance à 100% en poids,
   - zirconium : entre 10 et 30% en poids,
   - impuretés avec un pourcentage total de ces dernières compris entre 0 et 0.5% en poids. Plus précisément, les impuretés peuvent être des traces d'éléments sélectionnés parmi le groupe constitué de O, H, C, Fe, N, Ni, Si, Cu, Al, Cr, Mn, V, Sn, Mg, Mo, Pb, Co, B, chacun desdits éléments étant présent dans une quantité comprise entre 0 et 1000 ppm en poids,
- une étape de recuit suivi d'un refroidissement de ladite ébauche,
- une étape de dépôt d'un matériau ductile sur l'ébauche,
- au moins une étape de déformation de l'ébauche pour former un fil, avec une étape de recuit et refroidissement entre les étapes de déformation lorsqu'il y a plusieurs étapes de déformation,
- une étape d'estrapadage pour former le ressort spiral,
- une étape finale de traitement thermique permettant de fixer la forme du ressort spiral et d'ajuster le coefficient thermoélastique.

Préférentiellement, l'ébauche en alliage NbZr utilisé dans la présente invention ne comprend pas d'autres éléments à l'exception d'éventuelles et inévitables traces. Cela permet d'éviter la formation de phases fragiles.

Plus particulièrement, la teneur en oxygène est de préférence inférieure ou égale à 0.10% en poids du total, notamment inférieure ou égale à 0.05% en poids du total, voire encore inférieure ou égale à 0.03% en poids du total.

Plus particulièrement, la teneur en carbone est de préférence inférieure ou égale à 0.04% en poids du total, notamment inférieure ou égale à 0.02% en poids du total, voire encore inférieure ou égale à 0.015% en poids du total.

Plus particulièrement, la teneur en fer est de préférence inférieure ou égale à 0.05% en poids du total, notamment inférieure ou égale à 0.02% en poids du total, voire encore inférieure ou égale à 0.005% en poids du total.

Plus particulièrement, la teneur en azote est de préférence inférieure ou égale à 0.04% en poids du total, notamment inférieure ou égale à 0.02% en poids du total, voire encore inférieure ou égale à 0.015% en poids du total.

Plus particulièrement, la teneur en hydrogène est de préférence inférieure ou égale à 0.01% en poids du total, notamment inférieure ou égale à 0.0035% en poids du total, voire encore inférieure ou égale à 0.001 % en poids du total.

Plus particulièrement, la teneur en silicium est de préférence inférieure ou égale à 0.05% en poids du total, notamment inférieure ou égale à 0.02% en poids du total, voire encore inférieure ou égale à 0.005% en poids du total.

Plus particulièrement, la teneur en nickel est de préférence inférieure ou égale à 0.05% en poids du total, notamment inférieure ou égale à 0.01% en poids du total, voire encore inférieure ou égale à 0.002% en poids du total.

Plus particulièrement, la teneur en élément en solution solide ductile, tel que le cuivre, dans l'alliage, est inférieure ou égale à 0.05% en poids du total, notamment inférieure ou égale à 0.01% en poids du total, voire encore inférieure ou égale à 0.004% en poids du total.

Plus particulièrement, la teneur en aluminium est inférieure ou égale à 0.05% en poids du total, notamment inférieure ou égale à 0.01% en poids du total, voire encore inférieure ou égale à 0.002% en poids du total.

Plus particulièrement, la teneur en chrome est inférieure ou égale à 0.05% en poids du total, notamment inférieure ou égale à 0.01% en poids du total, voire encore inférieure ou égale à 0.002% en poids du total.

Plus particulièrement, la teneur en manganèse est inférieure ou égale à 0.05% en poids du total, notamment inférieure ou égale à 0.01% en poids du total, voire encore inférieure ou égale à 0.002% en poids du total.

Plus particulièrement, la teneur en vanadium est inférieure ou égale à 0.05% en poids du total, notamment inférieure ou égale à 0.01% en poids du total, voire encore inférieure ou égale à 0.002% en poids du total.

Plus particulièrement, la teneur en étain est inférieure ou égale à 0.01% en poids du total, notamment inférieure ou égale à 0.0035% en poids du total, voire encore inférieure ou égale à 0.001 % en poids du total.

Plus particulièrement, la teneur en magnésium est inférieure ou égale à 0.05% en poids du total, notamment inférieure ou égale à 0.01% en poids du total, voire encore inférieure ou égale à 0.002% en poids du total.

Plus particulièrement, la teneur en molybdène est inférieure ou égale à 0.05% en poids du total, notamment inférieure ou égale à 0.01% en poids du total, voire encore inférieure ou égale à 0.002% en poids du total.

Plus particulièrement, la teneur en plomb est inférieure ou égale à 0.05% en poids du total, notamment inférieure ou égale à 0.01% en poids du total, voire encore inférieure ou égale à 0.002% en poids du total.

Plus particulièrement, la teneur en cobalt est inférieure ou égale à 0.01% en poids du total, notamment inférieure ou égale à 0.0035% en poids du total, voire encore inférieure ou égale à 0.001% en poids du total.

Plus particulièrement, la teneur en bore est inférieure ou égale à 0.005% en poids du total, notamment inférieure ou égale à 0.0001 % en poids du total.

L'étape de recuit est un traitement de mise en solution, avec une durée comprise, de préférence, entre 5 minutes et 2 heures, à une température comprise entre 700°C et 1500°C, sous vide, suivie d'une trempe sous gaz ou d'un refroidissement naturel sous vide, pour obtenir le Zr en solution solide sursaturée dans le Nb en phase β.

L'étape de dépôt qui fait plus particulièrement l'objet de l'invention consiste à déposer une couche d'un matériau ductile choisi parmi le groupe comprenant le cuivre, le nickel, le cupro-nickel, le cupro-manganèse, l'or, l'argent, le nickel-phosphore Ni-P et le nickel-bore Ni-B, pour faciliter la mise en forme sous forme de fil. L'épaisseur de la couche de matériau ductile déposée est choisie de sorte que le rapport surface de matériau ductile/surface de l'alliage NbZr pour une section de fil donnée est inférieur à 1, de préférence inférieur à 0.5, et plus préférentiellement compris entre 0.01 et 0.4. A titre d'exemple, pour un diamètre total du fil de 0.1 mm, la couche de matériau ductile peut avoir une épaisseur de 7 µm pour une section en alliage de NbZrde 0.086 mm de diamètre. Cela correspond à un rapport entre la surface de matériau ductile (0.002 mm²) et la surface de NbZr (0.0058 mm²) de 0.35.

Le matériau ductile, de préférence du cuivre, est ainsi déposé à un moment donné pour faciliter la mise en forme du fil par étirage, tréfilage et laminage, de telle manière à ce qu'il en reste une épaisseur de préférence comprise entre 1 et 500 micromètres sur le fil au diamètre total de 0.2 à 1 millimètre.

L'apport de matériau ductile peut être galvanique, par PVD ou CVD, ou bien mécanique, c'est alors une chemise ou un tube de matériau ductile tel que le cuivre qui est ajusté sur une barre d'alliage NbZr à un gros diamètre, puis qui est amincie au cours de la ou des étapes de déformation du barreau composite. Ainsi, une possibilité est de former une billette composite par assemblage d'une barre de Nb-Zr et d'une chemise de cuivre qui est ensuit extrudée à chaud.

L'étape de déformation désigne d'une manière globale un ou plusieurs traitements de déformation, qui peuvent comprendre le tréfilage et/ou le laminage. Le tréfilage peut nécessiter l'utilisation d'une ou plusieurs filières lors de la même étape de déformation ou lors de différentes étapes de déformation si nécessaire. Le tréfilage est réalisé jusqu'à l'obtention d'un fil de section ronde. Le laminage peut être effectué lors de la même étape de déformation que le tréfilage ou dans une autre étape de déformation ultérieure. Avantageusement, le dernier traitement de déformation appliqué à l'alliage est un laminage, de préférence à profil rectangulaire compatible avec la section d'entrée d'une broche d'estrapadage.

Le procédé peut comporter une étape ou plusieurs étapes de déformation avec un taux de déformation pour chaque étape compris entre 1 et 5, de préférence entre 2 et 5, le taux de déformation répondant à la formule classique 2ln(d0/d) où d0 et d sont respectivement le diamètre avant et après déformation. Le taux total de déformation peut être compris entre 1 et 14.

Le procédé peut comporter des étapes intermédiaires de recuit entre les différentes étapes de déformation. Ces recuits intermédiaires sont également réalisés pendant une durée comprise entre 5 minutes et 2 heures, à une température comprise entre 700°C et 1500°C et suivis d'une trempe. Alternativement ces recuits peuvent être suivis d'un refroidissement lent c'est-à-dire naturelle de préférence sous vide.

Le procédé de l'invention comprend préférentiellement, après l'étape de déformation, une étape d'élimination de la couche de matériau ductile. De préférence, le matériau ductile est éliminé une fois toutes les opérations de déformation effectuées, c'est-à-dire après le dernier laminage, avant l'estrapadage. Cependant, il n'est pas exclu d'éliminer la couche de matériau ductile avant d'avoir finalisé toutes les opérations de déformation. Il est ainsi envisageable lors d'un laminage en plusieurs passes d'éliminer la couche de matériau ductile avant la dernière passe de laminage. De préférence, le fil est débarrassé de sa couche de matériau ductile, tel que le cuivre, notamment par attaque chimique, avec une solution à base de cyanures ou à base d'acides, par exemple d'acide nitrique.

Le traitement thermique final après l'estrapadage est réalisé à une température comprise entre 600 et 850°C, de préférence entre 650 et 750°C, pendant un temps compris entre 30 minutes et 80 heures, de préférence entre 30 minutes et 2 heures. Une structure biphasée avec du Nb en phase β et du Zr en phase α est obtenue à l'issue de ce traitement thermique.

Le procédé de l'invention permet la réalisation, et plus particulièrement la mise en forme, d'un ressort spiral pour balancier en alliage de type niobium-zirconium. Cet alliage présente des propriétés mécaniques élevées, en combinant une limite élastique très élevée, supérieure à 600 MPa, et un module d'élasticité très bas, de l'ordre de 60 GPa à 100 GPa. Cette combinaison de propriétés convient bien pour un ressort spiral. De plus, un tel alliage est paramagnétique.

Un alliage de type binaire comportant du niobium et du zirconium, du type sélectionné ci-dessus pour la mise en œuvre de l'invention, présente également un effet similaire à celui de l' « Elinvar », avec un coefficient thermo-élastique pratiquement nul dans la plage de températures d'utilisation usuelle de montres, et apte à la fabrication de spiraux auto-compensateurs.

## Revendications

1. Procédé de fabrication d'un ressort spiral destiné à équiper un balancier d'un mouvement d'horlogerie, comprenant :
- une étape d'élaboration d'une ébauche dans un alliage de niobium et de zirconium constitué de :
- niobium : balance à 100% en poids,
- zirconium : entre 10 et 30% en poids,
- impuretés avec un pourcentage total compris entre 0 et 0.5% en poids.
- une étape de recuit et refroidissement de l'ébauche,
- au moins une étape de déformation de l'ébauche recuite pour former un fil,
- une étape d'estrapadage pour former le ressort spiral,
- une étape de traitement thermique final du ressort spiral,
le procédé est **caractérisé en ce qu'**il comprend, avant l'étape de déformation, une étape de dépôt, sur l'ébauche, d'une couche d'un matériau ductile choisi parmi le groupe comprenant le cuivre, le nickel, le cupro-nickel, le cupro-manganèse, l'or, l'argent, le nickel-phosphore Ni-P et le nickel-bore Ni-B, pour faciliter la mise en forme sous forme de fil, l'épaisseur de la couche de matériau ductile déposée étant choisie de sorte que le rapport surface de matériau ductile/surface de l'alliage pour une section de fil donnée soit inférieur à 1, de préférence inférieur à 0.5, et plus préférentiellement compris entre 0.01 et 0.4.

2. Procédé selon la revendication 1, **caractérisé en ce qu'**il comprend, avant l'étape d'estrapadage, une étape d'élimination de ladite couche de matériau ductile.

3. Procédé selon l'une des revendications précédentes, **caractérisé en ce que** l'étape de déformation est réalisée par tréfilage et/ou laminage.

4. Procédé selon l'une des revendications précédentes, **caractérisé en ce qu'**il comporte une ou plusieurs étapes de déformation avec pour chaque étape une déformation effectuée avec un taux de déformation compris entre 1 et 5, le cumul global des déformations sur l'ensemble des étapes amenant un taux total de déformation compris entre 1 et 14.

5. Procédé selon la revendication précédente, **caractérisé en ce qu'**il comporte une étape de recuit et refroidissement entre les étapes de déformation.

6. Procédé selon l'une des revendications précédentes, **caractérisé en ce que** chaque étape de recuit et refroidissement est un traitement de mise en solution, avec une durée comprise entre 5 minutes et 2 heures à une température comprise entre 700°C et 1500°C, sous vide, suivie d'une trempe sous gaz ou d'un refroidissement naturel sous vide, pour obtenir le Zr en solution solide sursaturée dans le Nb.

7. Procédé selon l'une quelconque des revendications précédentes, **caractérisé en ce que** l'étape de traitement thermique final est réalisée pendant une durée comprise entre 30 minutes et 80 heures à une température comprise entre 600°C et 850°C.

## Patentansprüche

1. Verfahren zur Herstellung einer Spiralfeder, die dazu bestimmt ist, eine Unruh eines Uhrwerks auszustatten, umfassend:
- einen Schritt der Erstellung eines Rohwerks in einer Legierung aus Niobium und aus Zirkonium, bestehend aus:
- Niobium: Waage auf 100 Gewichts-%,
- Zirkonium: zwischen 10 und 30 Gewichts-%,
- Unreinheiten mit einem Gesamtprozentanteil, der zwischen 0 und 0,5 Gewichts-% beträgt,
- einen Schritt des Glühens und Abkühlens des Rohwerks,
- wenigstens einen Schritt der Umformung des geglühten Rohwerks, um einen Draht zu bilden,
- einen Schritt des Aufwindens, um die Spiralfeder zu bilden,
- einen Schritt der thermischen Abschlussbehandlung der Spiralfeder, wobei das Verfahren **dadurch gekennzeichnet ist, dass** es vor dem Schritt der Umformung einen Schritt des Auftragens, auf dem Rohwerk, einer Schicht aus einem schmiedbaren Werkstoff umfasst, der gewählt wird aus der Gruppe, umfassend Kupfer, Nickel, Kupfer-Nickel, Kupfer-Mangan, Gold, Silber, Nickel-Phosphor Ni-P und Nickel-Bor Ni-B, um die Formung in Form eines Drahtes zu erleichtern, wobei die Dicke der aufgetragenen Schicht aus schmiedbarem Werkstoff so gewählt wird, dass das Verhältnis Oberfläche aus schmiedbarem Werkstoff/Oberfläche der Legierung für einen gegebenen Drahtquerschnitt kleiner als 1 ist, vorzugsweise kleiner als 0,5 und besonders bevorzugt zwischen 0,01 und 0,4 beträgt.

2. Verfahren nach Anspruch 1, **dadurch gekennzeichnet, dass** es vor dem Schritt des Aufwindens einen Schritt der Beseitigung der Schicht aus schmiedbarem Werkstoff umfasst.

3. Verfahren nach einem der vorstehenden Ansprüche, **dadurch gekennzeichnet, dass** der Schritt der Umformung durch Drahtziehen und/oder Walzen ausgeführt wird.

4. Verfahren nach einem der vorstehenden Ansprüche, **dadurch gekennzeichnet, dass** es einen oder mehrere Schritte der Umformung umfasst, wobei jeder Schritt eine Umformung aufweist, die mit einem Umformgrad durchgeführt wird, der zwischen 1 und 5 beträgt, wobei die Gesamtkumulierung der Umformungen über die Gesamtheit der Schritte einen Gesamtumformgrad herbeiführt, der zwischen 1 und 14 beträgt.

5. Verfahren nach dem vorstehenden Anspruch, **dadurch gekennzeichnet, dass** es einen Schritt des Glühens und Abkühlens zwischen den Schritten der Umformung umfasst.

6. Verfahren nach einem der vorstehenden Ansprüche, **dadurch gekennzeichnet, dass** jeder Schritt des Glühens und Abkühlens eine Lösungsbehandlung ist, mit einer Dauer, die zwischen 5 Minuten und 2 Stunden beträgt, bei einer Temperatur, die zwischen 700°C und 1500°C beträgt, unter Vakuum, gefolgt von einer Gashärtung oder einer natürlichen Abkühlung unter Vakuum, um das Zr in fester übersättigter Lösung in dem Nb zu erhalten.

7. Verfahren nach einem der vorstehenden Ansprüche, **dadurch gekennzeichnet, dass** der Schritt der thermischen Abschlussbehandlung während einer Dauer ausgeführt wird, die zwischen 30 Minuten und 80 Stunden beträgt, bei einer Temperatur, die zwischen 600°C und 850°C beträgt.

## Claims

1. Method for manufacturing a balance spring intended to equip a balance of a horological movement, comprising:
- a step of producing a blank made of a niobium and zirconium alloy containing:
- niobium: the remainder to 100 wt%,
- zirconium: between 10 and 30 wt%,
- impurities, the total percentage whereof lies in the range 0 to 0.5 wt%.
- a step of annealing and cooling the blank,
- at least one step of deforming the annealed blank in order to form a wire,
- a winding step for forming the balance spring,
- a final step of heat treating the balance spring,
the method is **characterised in that** it comprises, before the deformation step, a step of depositing, on the blank, a layer of a ductile material chosen from the group consisting of copper, nickel, cupronickel, cupro-manganese, gold, silver, nickel-phosphorus Ni-P and nickel-boron Ni-B, in order to facilitate the wire shaping operation, the thickness of the ductile material layer deposited being chosen such that the ratio of the area of ductile material to the area of the alloy for a given wire cross-section is less than 1, preferably less than 0.5, and more preferably lies in the range 0.01 to 0.4.

2. Method according to claim 1, **characterised in that** it comprises, before the winding step, a step of eliminating said layer of ductile material.

3. Method according to one of the preceding claims, **characterised in that** the deformation step is carried out by wire drawing and/or rolling.

4. Method according to one of the preceding claims, **characterised in that** it includes one or more deformation steps with, for each step, a deformation carried out with a deformation ratio that lies in the range 1 to 5, the total cumulation of the deformations over all of the steps producing a total deformation ratio that lies in the range 1 to 14.

5. Method according to the preceding claim, **characterised in that** it includes an annealing and cooling step between the deformation steps.

6. Method according to one of the preceding claims, **characterised in that** each annealing and cooling step is a dissolving treatment, with a duration that lies in the range 5 minutes to 2 hours at a temperature that lies in the range 700°C to 1,500°C, in a vacuum, followed by quenching, in a gas or by natural cooling in a vacuum, to obtain a supersaturated solid solution of Zr in Nb.

7. Method according to any one of the preceding claims, **characterised in that** the final heat treatment step is carried out for a duration that lies in the range 30 minutes to 80 hours at a temperature that lies in the range 600°C to 850°C.
